# EUROPEAN PATENT APPLICATION

(11) **EP 4 554 285 A1**
(43) Date of publication of application: **14.05.2025**
(21) Application number: 22950191.1
(22) Date of filing: 05.07.2022
(51) Int. Cl.: H04W 36/28, H04W 36/16, H04W 36/30, H04W 36/34

(54) **WIRELESS TERMINAL DEVICE AND WIRELESS COMMUNICATION METHOD**

(71) Applicant: NIPPON TELEGRAPH AND TELEPHONE CORPORATION, Chiyoda-ku, Tokyo 100-8116 (JP)
(72) Inventor: KISHIDA, Akira, Musashino-shi, Tokyo 180-8585 (JP); ABEYSEKERA, Hirantha, Musashino-shi, Tokyo 180-8585 (JP); OTANI, Hanae, Musashino-shi, Tokyo 180-8585 (JP); IWATANI, Junichi, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP); OTSUKI, Shinya, Musashino-shi, Tokyo 180-8585 (JP); OMIYA, Riku, Musashino-shi, Tokyo 180-8585 (JP)
(74) Representative: Nederlandsch Octrooibureau
(86) International application number: PCT/JP2022/026721
(87) International publication number: WO 2024/009397

(57) **Abstract**

A wireless terminal apparatus includes a plurality of wireless units, a determination unit, a search unit, and a handover unit. The plurality of wireless units wirelessly communicate with a first access point by multi-link which wirelessly connects through a plurality of links. The determination unit determines whether or not there is a quality degradation link having an index value based on reception power smaller than a first threshold among links included in the multi-link. When there is the quality degradation link, the search unit searches for a second access point connectable by the multi-link and capable of handover, by using a search link selected from links included in the multi-link. When there is the second access point, the handover unit switches the connection destination of the search link from the first access point to the second access point.

## Description

### Technical Field

An embodiment relates to a wireless terminal apparatus and a wireless communication method.

### Background Art

A wireless local area network (LAN) is known as a communication system that wirelessly connects an access point to a wireless terminal apparatus. The wireless terminal apparatus can access a network via an access point in a communication area by using the wireless LAN.

In addition, there is a handover technology in which, when reception power with a first access point decreases when a wireless terminal apparatus moves, connection with the first access point is disconnected, and the wireless terminal apparatus is reconnected to a second access point having a preferable propagation environment.

### Citation List

### Non Patent Literature

Non Patent Literature 1: IEEE P802.11beTM/D1.5, "35.3. Multi-link operation", March 18, 2022

### Summary of Invention

### Technical Problem

When the wireless terminal (STA MLD) having a multi-link configuration hands over from a base station (AP MLD) having a multi-link configuration to another AP MLD, it is necessary to disconnect all the multi-link connections with the AP MLD of the handover source and reconfigure all the links with the AP MLD of the handover destination again, and instantaneous interruption occurs during this. Furthermore, there is a possibility that a ping-pong phenomenon in which attribution processing is repeated between an access point of an attribution source and an access point of an attribution destination occurs.

The present invention has been made in view of the above circumstances, and an object thereof is to achieve stable handover.

### Solution to Problem

A wireless terminal apparatus of an aspect includes a plurality of wireless units, a determination unit, a search unit, and a handover unit. The plurality of wireless units wirelessly communicate with a first access point by multi-link which wirelessly connects through a plurality of links. The determination unit determines whether or not there is a quality degradation link having an index value based on reception power smaller than a first threshold among links included in the multi-link. When there is the quality degradation link, the search unit searches for a second access point connectable by the multi-link and capable of handover, by using a search link selected from links included in the multi-link. When there is the second access point, the handover unit switches the connection destination of the search link from the first access point to the second access point.

### Advantageous Effects of Invention

According to an embodiment, stable handover can be achieved.

### Brief Description of Drawings

Fig. 1 is a block diagram illustrating a configuration of a communication system according to an embodiment.
Fig. 2 is a block diagram illustrating an example of a hardware configuration of an access point according to the embodiment.
Fig. 3 is a block diagram illustrating an example of a hardware configuration of a terminal according to the embodiment.
Fig. 4 is a block diagram illustrating an example of a functional configuration of the access point according to the embodiment.
Fig. 5 is a block diagram illustrating an example of a functional configuration of the terminal according to the embodiment.
Fig. 6 is a flowchart illustrating an example of operation of a communication system according to the embodiment.
Fig. 7 is a diagram illustrating a specific example of handover processing of the communication system according to the embodiment.
Fig. 8 is a diagram illustrating a specific example of handover processing of the communication system according to the embodiment.
Fig. 9 is a diagram illustrating a specific example of handover processing of the communication system according to the embodiment.
Fig. 10 is a flowchart illustrating another example of operation of the communication system according to the embodiment.

### Description of Embodiments

Hereinafter, an embodiment will be described with reference to the drawings. Note that in the following description, components having the same functions and configurations will be denoted by common reference signs.

### 1. Configuration

### 1.1 Configuration of Communication System

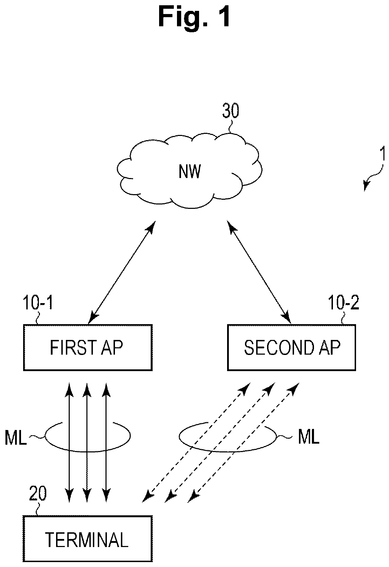

Fig. 1 is a block diagram illustrating an example of a configuration of a communication system according to the present embodiment. As illustrated in Fig. 1, the communication system includes a first access point 10-1, a second access point 10-2, a terminal 20, and a network 30. In the example of Fig. 1, an example in which there are two access points and one terminal 20 is illustrated, but a plurality of access points and terminals may be further provided. In the drawings of Fig. 1 and subsequent drawings, the access point is simply referred to as "AP". Unless otherwise specified, a description common to the access points will be described as the "access point 10".

The access point 10 is, for example, an access point of a wireless LAN, and is also referred to as a base station. The access point 10 is configured to communicate with a server (not illustrated) on the network 30 in a wired or wireless manner. The access point 10 is configured to communicate with the terminal 20 wirelessly. Communication between the access point 10 and the terminal 20 is based on, for example, the IEEE 802.11 standard.

The terminal 20 is a wireless terminal such as a smartphone and a personal computer (PC). The terminal 20 is configured to communicate with a server on the network 30 via the access point 10. The terminal 20 is also referred to as a wireless terminal apparatus.

The access point 10 and the terminal 20 have a wireless communication function based on, for example, the open systems interconnection (OSI) reference model. In the OSI reference model, a wireless communication function is divided into seven layers (the first layer: a physical layer, the second layer: a data link layer, the third layer: a network layer, the fourth layer: a transport layer, the fifth layer: a session layer, the sixth layer: a presentation layer, the seventh layer: an application layer). The data link layer includes a logical link control (LLC) sublayer and a media access control (MAC) sublayer.

The multi-link ML can be applied to the wireless connection scheme between the access point 10 and the terminal 20. The multi-link ML is a wireless connection method capable of wirelessly connecting with a plurality of links and transmitting and receiving data (exchanging traffic) using the plurality of links at the same time. The access point 10 and the terminal 20 to which the multi-link ML is applied manage the state of the multi-link ML by the link management information.

In the present embodiment, it is assumed that the terminal 20 belonging to the first access point 10-1 and connected by the multi-link ML moves, and a so-called handover is performed in which the connection is switched to the second access point 10-2 whose reception power is higher than that of the first access point 10-1 and connectable by the multi-link ML on the basis of the reception power with the first access point 10-1.

### 1.2 Hardware Configuration

Next, a hardware configuration of the access point and the terminal in the communication system according to the present embodiment will be described.

### 1.2.1 Hardware Configuration of Access Point

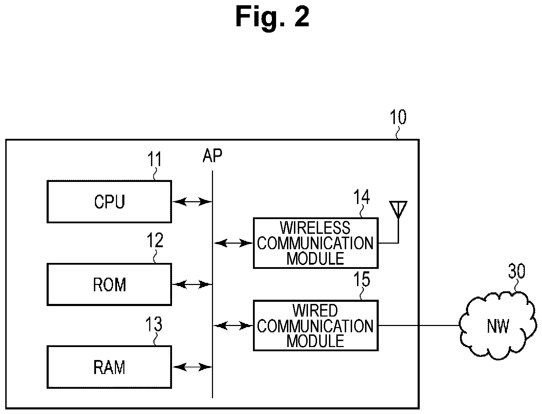

Fig. 2 is a block diagram illustrating an example of a hardware configuration of an access point according to the present embodiment. As illustrated in Fig. 2, the access point 10 includes, for example, a central processing unit (CPU) 11, a read only memory (ROM) 12, a random access memory (RAM) 13, a wireless communication module 14, and a wired communication module 15.

The CPU 11 is a processing circuit that controls the entire operation of the access point 10. The ROM 12 is a nonvolatile semiconductor memory, for example. The ROM 12 stores programs and data for controlling the access point 10. The RAM 13 is, for example, a volatile semiconductor memory. The RAM 13 is used as a working area of the CPU 11. The wireless communication module 14 is a circuit that is used to transmit/receive data with a wireless signal. The wireless communication module 14 is connected to an antenna. The wired communication module 15 is a circuit used to transmit and receive data according to a wired signal. The wired communication module 15 is connected to the network 30.

### 1.2.2 Hardware Configuration of Terminal

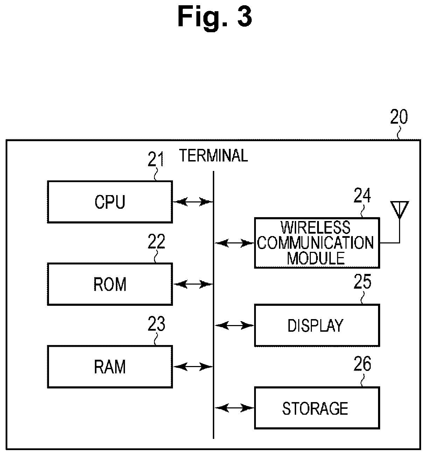

Fig. 3 is a block diagram illustrating an example of a hardware configuration of a terminal according to the present embodiment. As illustrated in Fig. 3, the terminal 20 includes, for example, a CPU 21, a ROM 22, a RAM 23, a wireless communication module 24, a display 25, and a storage 26.

The CPU 21 is a processing circuit that controls the entire operation of the terminal 20. The ROM 22 is a nonvolatile semiconductor memory, for example. The ROM 22 stores programs and data for controlling the terminal 20. The RAM 23 is, for example, a volatile semiconductor memory. The RAM 23 is used as a working area of the CPU 21. The wireless communication module 24 is a circuit used to transmit and receive data by a wireless signal. The wireless communication module 24 is connected to an antenna. The display 25 is, for example, a liquid crystal display (LCD) or an electro luminescence (EL) display. The display 25 displays a graphical user interface (GUI) corresponding to application software, or the like. The storage 26 is a nonvolatile storage device. The storage 26 stores system software of the terminal 20, and the like.

### 1.3 Functional Configuration

Next, a functional configuration of the access point and the terminal in the communication system according to the present embodiment will be described.

### 1.3.1 Functional Configuration of Access Point

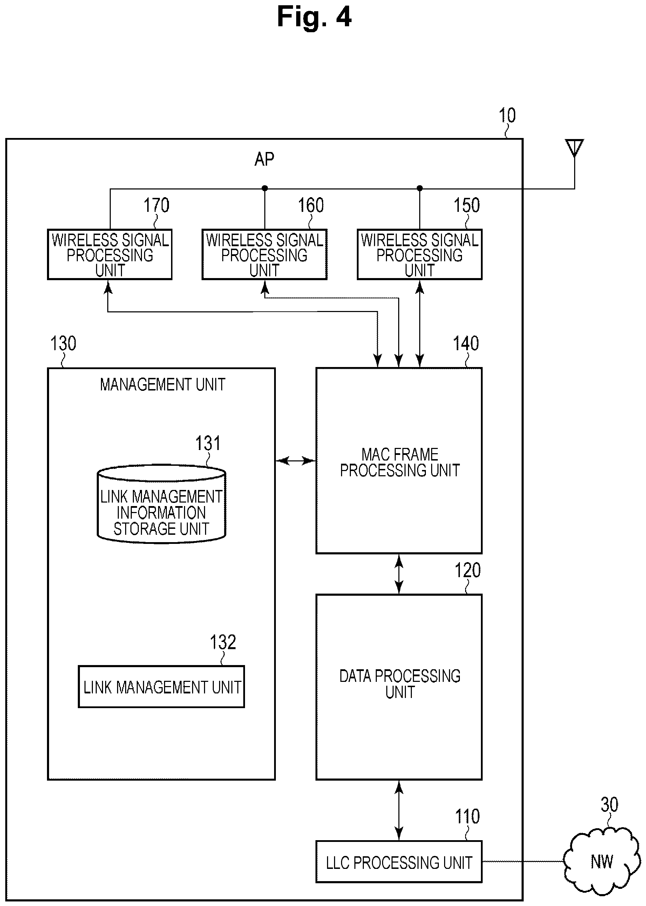

Fig. 4 is a block diagram illustrating an example of a functional configuration of the access point according to the present embodiment.

The access point 10 functions as a computer including an LLC processing unit 110, a data processing unit 120, a management unit 130, a MAC frame processing unit 140, and a plurality of wireless signal processing units 150, 160, and 170. The LLC processing unit 110 is a functional block that performs processing corresponding to the LLC sublayer of the second layer and the third layer to the seventh layer. The data processing unit 120, the management unit 130, and the MAC frame processing unit 140 are functional blocks that perform processing corresponding to the MAC sublayer of the second layer. The plurality of wireless signal processing units 150, 160, and 170 are functional blocks that perform processing corresponding to the MAC sublayer of the second layer and the first layer.

The LLC processing unit 110 adds, for example, a destination service access point (DSAP) header, a source service access point (SSAP) header, and the like to the data received from the network 30 to generate an LLC packet. Then, the LLC processing unit 110 inputs the generated LLC packet to the data processing unit 120. In addition, the LLC processing unit 110 extracts data from the LLC packet input from the data processing unit 120. Then, the LLC processing unit 110 transmits the extracted data to the network 30.

The data processing unit 120 adds a MAC header to the LLC packet input from the LLC processing unit 110 to generate a MAC frame. Then, the data processing unit 120 inputs the generated MAC frame to the MAC frame processing unit 140. In addition, the data processing unit 120 extracts the LLC packet from the MAC frame input from the MAC frame processing unit 140. Then, the data processing unit 120 inputs the extracted LLC packet to the LLC processing unit 110. Hereinafter, the MAC frame including data is also referred to as a "data frame".

The management unit 130 manages the state of a link between the access point 10 and the terminal 20. A MAC frame including management information related to a link is input and output between the management unit 130 and the MAC frame processing unit 140. Hereinafter, the MAC frame including management information is also referred to as a "management frame". The management unit 130 includes a link management information storage unit 131 and a link management unit 132.

The link management information storage unit 131 stores information (hereinafter, link management information) related to a link between the access point 10 and the wirelessly connected terminal 20.

The link management unit 132 controls establishment of a link with the terminal 20. For example, the link management unit 132 performs association processing and subsequent authentication processing in response to a connection request from the terminal 20. The link management unit 132 controls the state of a link established with the terminal 20. For example, the link management unit 132 can determine association between the traffic type (TID) and the STA function in establishing the multi-link ML.

When a MAC frame is input from the data processing unit 120 or the management unit 130, the MAC frame processing unit 140 associates the MAC frame with a link. For example, when a MAC frame is input from the data processing unit 120, the MAC frame processing unit 140 refers to the link management information stored in the link management information storage unit 131 to specify a link associated with a TID included in the MAC header. Then, the MAC frame processing unit 140 inputs the MAC frame to the wireless signal processing unit corresponding to the specified link. In addition, when the MAC frame is input from the plurality of wireless signal processing units 150, 160, and 170, the MAC frame processing unit 140 inputs the MAC frame to the data processing unit 120 or the management unit 130 according to the type of the MAC frame. Specifically, when the MAC frame is a data frame, the MAC frame processing unit 140 inputs the MAC frame to the data processing unit 120. When the MAC frame is a management frame, the MAC frame processing unit 140 inputs the MAC frame to the management unit 130.

Each of the plurality of wireless signal processing units 150, 160, and 170 has an STA function for establishing a link between the access point 10 and the terminal 20. The STA function is a functional configuration included in each of the access point 10 and the terminal 20. That is, a pair of STA functions is used for establishing one link. In the present embodiment, described is a case where three pairs of STA functions are allocated to wireless communication between the access point 10 and the terminal 20. Specifically, the plurality of wireless signal processing units 150, 160, and 170 correspond to STA1, STA2, and STA3 in the multi-link ML, respectively. For example, the 2.4 GHz band channel, the 5 GHz band channel, and the 6 GHz band channel are allocated to STA1, STA2, and STA3, respectively.

Each of the plurality of wireless signal processing units 150, 160, and 170 has an equivalent functional configuration. Each of the plurality of wireless signal processing units 150, 160, and 170 generates a wireless frame by adding a preamble or the like to the MAC frame input from the MAC frame processing unit 140. Each of the plurality of wireless signal processing units 150, 160, and 170 converts the generated wireless frame into a wireless signal. Then, each of the plurality of wireless signal processing units 150, 160, and 170 radiates (transmits) the converted wireless signal via the antenna. The conversion processing from the wireless frame to the wireless signal includes, for example, convolutional encoding processing, interleave processing, subcarrier modulation processing, inverse fast Fourier transform processing, orthogonal frequency division multiplexing (OFDM) modulation processing, and frequency conversion processing. In addition, each of the plurality of wireless signal processing units 150, 160, and 170 converts a wireless signal from the terminal 20 received via the antenna into a wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the plurality of wireless signal processing units 150, 160, and 170 extracts the MAC frame from the converted wireless frame. Then, each of the plurality of wireless signal processing units 150, 160, and 170 inputs the extracted MAC frame to the MAC frame processing unit 140.

### 1.3.2 Functional Configuration of Terminal

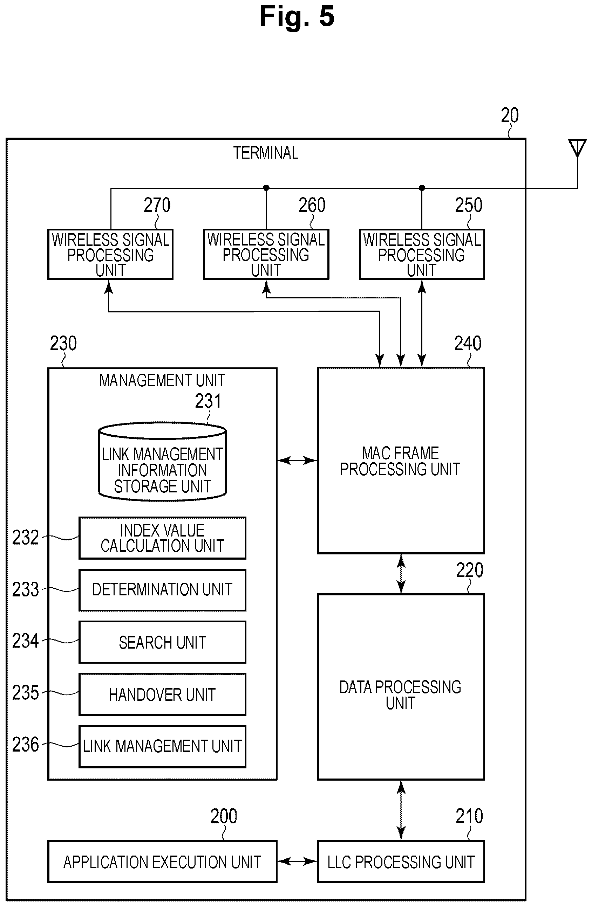

Fig. 5 is a block diagram illustrating an example of a functional configuration of the terminal according to the present embodiment.

The terminal 20 functions as a computer including an application execution unit 200, an LLC processing unit 210, a data processing unit 220, a management unit 230, a MAC frame processing unit 240, and a plurality of wireless signal processing units 250, 260, and 270. The application execution unit 200 is a functional block that executes processing corresponding to the seventh layer. The LLC processing unit 210 is a functional block that executes processing corresponding to the LLC sublayer of the second layer and the third layer to the sixth layer. The data processing unit 220, the management unit 230, and the MAC frame processing unit 240 are functional blocks that execute processing corresponding to the MAC sublayer of the second layer. The plurality of wireless signal processing units 250, 260, and 270 are functional blocks that execute processing corresponding to the MAC sublayer of the second layer and the first layer.

The application execution unit 200 executes an application on the basis of data input from the LLC processing unit 210. In addition, the application execution unit 200 inputs data to the LLC processing unit 210. For example, the application execution unit 200 can display application information on the display 25. In addition, the application execution unit 200 can operate on the basis of operation of the input interface.

The LLC processing unit 210 adds a DSAP header, an SSAP header, and the like to data input from the application execution unit 200 to generate an LLC packet. Then, the LLC processing unit 210 inputs the generated LLC packet to the data processing unit 220. In addition, the LLC processing unit 210 extracts data from the LLC packet input from the data processing unit 220. Then, the LLC processing unit 210 inputs the extracted data to the application execution unit 200.

The data processing unit 220 adds a MAC header to the LLC packet input from the LLC processing unit 210 to generate a MAC frame. Then, the data processing unit 220 inputs the generated MAC frame to the MAC frame processing unit 240. In addition, the data processing unit 220 extracts the LLC packet from the MAC frame input from the MAC frame processing unit 240. Then, the data processing unit 220 inputs the extracted LLC packet to the LLC processing unit 210.

The management unit 230 manages the state of a link between the access point 10 and the terminal 20. A MAC frame including management information related to a link is input and output between the management unit 230 and the MAC frame processing unit 240. The management unit 230 includes a link management information storage unit 231, an index value calculation unit 232, a determination unit 233, a search unit 234, a handover unit 235, and a link management unit 236.

The link management information storage unit 231 stores information related to a link between the terminal 20 and the wirelessly connected access point 10.

The index value calculation unit 232 calculates an index value based on reception power for evaluating the strength and quality of radio waves in each link of the multi-link connected to the first access point 10-1.

The determination unit 233 determines whether there is a quality degradation link (also referred to as a first link) having an index value based on reception power smaller than a first threshold among links included in the multi-link.

When there is the quality degradation link, the search unit 234 searches for a second access point 10-2 connectable by the multi-link and capable of handover, by using a search link selected from links included in the multi-link.

When there is the second access point 10-2, the handover unit 235 switches the connection destination of the second link from the first access point 10-1 to the second access point 10-2, in other words, implements the handover from the first access point 10-1 to the second access point 10-2.

The link management unit 236 controls establishment of a link with the access point 10. For example, the link management unit 236 executes association processing and subsequent authentication processing when transmitting a connection request to the access point 10. The link management unit 236 controls the state of a link established with the access point 10. For example, the link management unit 236 can determine association between the TID and the STA function in establishing the multi-link ML.

When a MAC frame is input from the data processing unit 220 or the management unit 230, the MAC frame processing unit 240 associates the MAC frame with a link. For example, when a MAC frame is input from the data processing unit 220, the MAC frame processing unit 240 refers to the link management information storage unit 231 to specify a link associated with a TID included in the MAC header. Then, the MAC frame processing unit 240 inputs the MAC frame to the wireless signal processing unit corresponding to the specified link. In addition, when the MAC frame is input from the plurality of wireless signal processing units 250, 260, and 270, the MAC frame processing unit 240 inputs the MAC frame to the data processing unit 220 or the management unit 230 according to the type of the MAC frame. Specifically, when the MAC frame is a data frame, the MAC frame processing unit 240 inputs the MAC frame to the data processing unit 220. When the MAC frame is a management frame, the MAC frame processing unit 240 inputs the MAC frame to the management unit 230.

Each of the plurality of wireless signal processing units 250, 260, and 270 has an STA function and is also referred to as a wireless unit. The plurality of wireless signal processing units 250, 260, and 270 have functional configurations equivalent to each other and correspond to STA1, STA2, and STA3 in the multi-link ML, respectively. Each of the plurality of wireless signal processing units 250, 260, and 270 generates a wireless frame by adding a preamble or the like to the MAC frame input from the MAC frame processing unit 240. Each of the plurality of wireless signal processing units 250, 260, and 270 converts the generated wireless frame into a wireless signal. Then, each of the plurality of wireless signal processing units 250, 260, and 270 radiates (transmits) the converted wireless signal via the antenna. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the plurality of wireless signal processing units 250, 260, and 270 converts a wireless signal from the access point 10 received via the antenna into a wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the plurality of wireless signal processing units 250, 260, and 270 extracts the MAC frame from the converted wireless frame. Then, each of the plurality of wireless signal processing units 250, 260, and 270 inputs the extracted MAC frame to the MAC frame processing unit 240.

### 2. Operation of Communication System

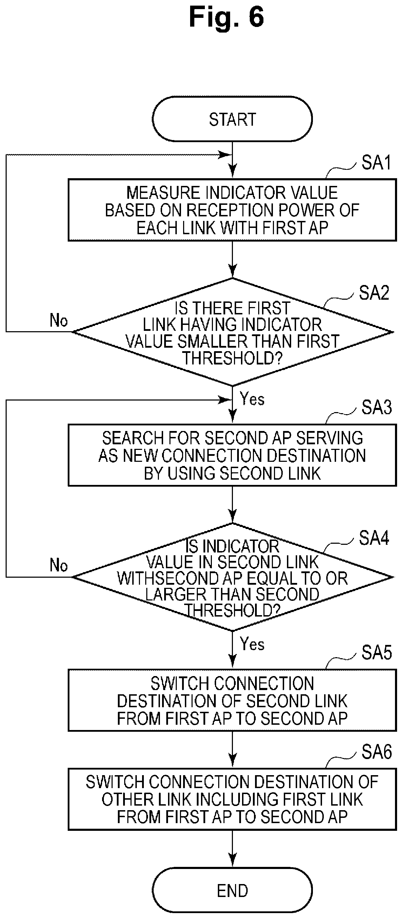

Next, an example of an operation of the communication system according to the present embodiment will be described with reference to a flowchart of Fig. 6. Here, a case where a second link having an index value equal to or larger than a first threshold among links included in the multi-link is used as the search link will be described as an example.

In step SA1, the index value calculation unit 232 calculates an index value based on the reception power of each link in the multi-link with the first access point 10-1. The measured index value is, for example, an index value related to radio wave strength and quality based on reception power, such as received signal strength indicator (RSSI) based on a result of measuring power of a signal from the first access point 10-1, reference signal received power (RSRP) related to radio wave strength, reference signal received quality (RSRP) related to reception quality of radio waves, and signal to interference plus noise ratio (SINR) related to a ratio of interference between a signal and noise.

In step SA2, the determination unit 233 determines whether there is a first link whose index value is smaller than the first threshold. Specifically, it is determined whether there is a link in which the wireless communication environment has degraded in the multi-link. The first threshold is, for example, a value smaller than an index value measured in a preferable wireless communication environment but larger than an index value based on a lower limit power at which prescribed communication becomes impossible.

In a case where there is a first link having the index value smaller than the first threshold, the process proceeds to step SA3. In a case where there is no first link having the index value smaller than the first threshold, the process returns to step SA1, and the similar process is repeated until there is the first link.

In step SA3, the search unit 234 searches for the second access point 10-2 to be a new connection destination using the second link different from the first link and having the index value equal to or larger than the first threshold among the links included in the multi-link. Specifically, the search unit 234 scans a channel in an available frequency band using the second link. Here, it is assumed that there is one second link used for scanning, but in a case where there are a plurality of second links having different frequency bands, the second access point 10-2 may be searched for in each of the second links. The search unit 234 detects one or more second access points 10-2 connectable by the second link between the terminal 20 and the access point 10 on the basis of passive scanning for receiving a beacon signal periodically transmitted by an access point existing around the terminal 20 or active scanning for performing probe response according to a probe request from the terminal 20.

In step SA4, the determination unit 233 determines whether the index value based on the reception power of the second link with the second access point 10-2 is equal to or larger than the second threshold. The index value may be calculated by the same method as in step SA1. The second threshold is a value equal to or larger than the first threshold. For example, with the second threshold being a value larger than the first threshold, searching is performed for an access point having a better wireless communication environment of the second link than that of the first access point 10-1. When the index value on the second link is equal to or larger than the second threshold, the process proceeds to step SA5, and when the index value in the second link is smaller than the second threshold, the process returns to step SA3 to continue the search for the second access point 10-2.

In step SA5, the handover unit 235 switches the connection destination of the second link from the first access point 10-1 to the second access point 10-2. Specifically, the handover unit 235 disconnects the connection of the second link between the terminal 20 and the first access point 10-1, and connects the terminal 20 and the second access point 10-2 by the second link. As a result, the handover of the second link is executed.

In step SA6, after the connection between the terminal 20 and the second access point 10-2 by the second link is established by the processing in step SA5, the handover unit 235 switches the connection destination of the remaining links including the first link in the multi-link from the first access point 10-1 to the second access point 10-2. The method of executing the handover of each link is similar to that in step SA5.

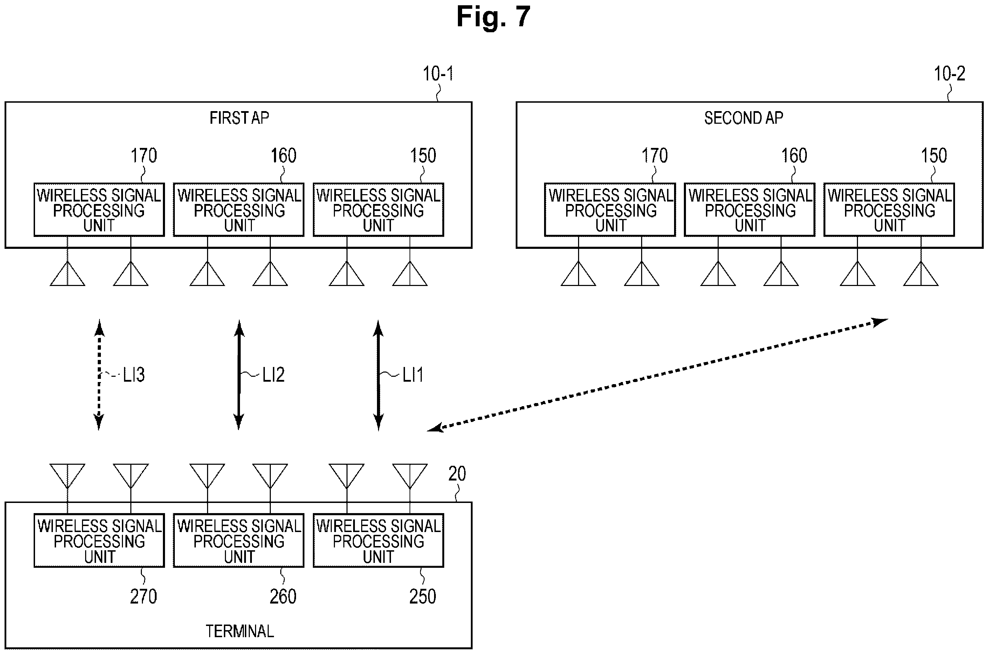

Next, a specific example of the handover processing of the communication system illustrated in Fig. 6 will be described with reference to Figs. 7 to 9.

Fig. 7 illustrates a state where the first access point 10-1 and the terminal 20 are connected by the multi-link. Here, it is assumed that the wireless signal processing unit 150 of the first access point 10-1 and the wireless signal processing unit 250 of the terminal 20 are connected by a "link LI1", the wireless signal processing unit 160 of the first access point 10-1 and the wireless signal processing unit 260 of the terminal 20 are connected by a "link LI2", and the wireless signal processing unit 170 of the first access point 10-1 and the wireless signal processing unit 270 of the terminal 20 are connected by a "link LI3".

Here, the link LI3 is assumed to be a first link having the index value of the reception power smaller than the first threshold and the wireless communication environment is degraded, and the link LI1 and the link LI2 are assumed to be a second link having the index value of the reception power equal to or larger than the first threshold and the wireless communication environment is preferable.

The search unit 234 of the terminal 20 searches for an access point existing around the terminal 20 using the link LI1 as the second link. It is assumed that the search unit 234 of the terminal 20 detects the second access point 10-2.

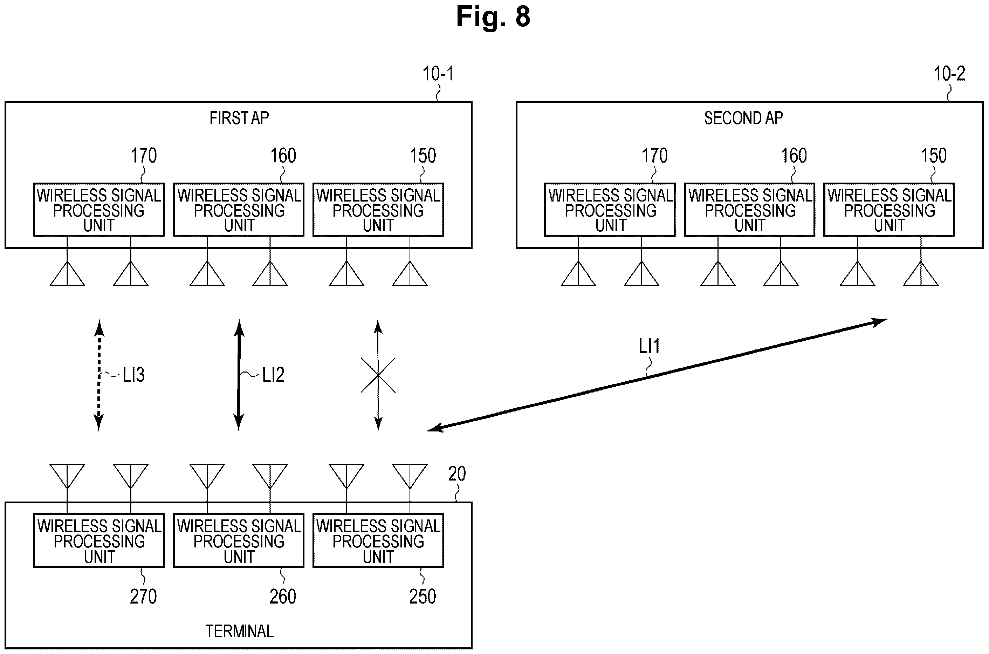

After detecting the second access point 10-2, as illustrated in Fig. 8, the handover unit 235 of the terminal 20 disconnects the link LI1 between the first access point 10-1 and the terminal 20, and connects the wireless signal processing unit 150 of the second access point 10-2 and the wireless signal processing unit 250 of the terminal 20. As a result, the handover to the second access point 10-2 is executed for the link LI1. During this period, communication between the first access point 10-1 and the terminal 20 can be continued on other links (the link LI2 and the link LI3) of the multi-link.

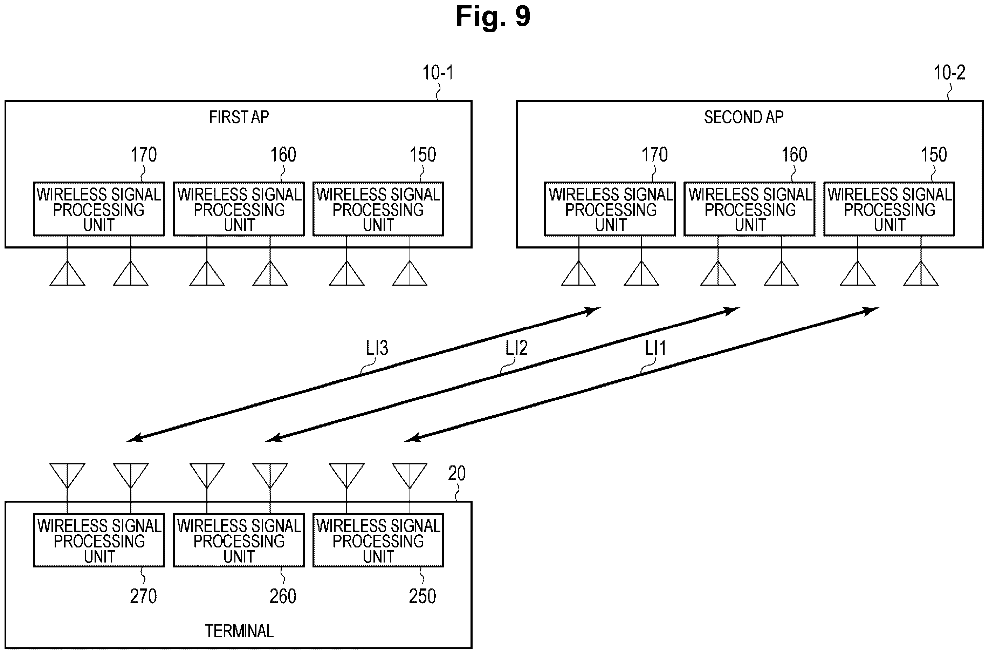

After the handover is executed for the link LI1, as illustrated in Fig. 9, the handover is similarly executed for the link LI2 and the link LI3 connected to the first access point 10-1. Specifically, the handover unit 235 of the terminal 20 disconnects the link LI2 and the link LI3 between the first access point 10-1 and the terminal 20, connects the wireless signal processing unit 160 of the second access point 10-2 and the wireless signal processing unit 260 of the terminal 20, and connects the wireless signal processing unit 170 and the wireless signal processing unit 270 of the terminal 20, and thereby, the handover to the second access point 10-2 is executed for each of the link LI2 and the link LI3. During this time, although there is a timing at which the connection between the link LI2 and the link LI3 is disconnected, communication can be continued between the second access point 10-2 and the terminal 20 by the link LI1. As described above, the handover can be achieved in the entire multi-link.

In the example of Figs. 6 to 9, it is assumed that the wireless communication environment of each link of the multi-link is better in the second access point 10-2 serving as the handover destination than in the first access point 10-1 serving as the current connection destination, but there is a possibility that the wireless communication environment is not improved or degraded in a certain link. Therefore, after the handover of the second link is executed, in a case where the wireless communication environment of the remaining links of the multi-link with the access point of the handover destination is degraded more than the current connection destination wireless communication environment, the handover may be stopped.

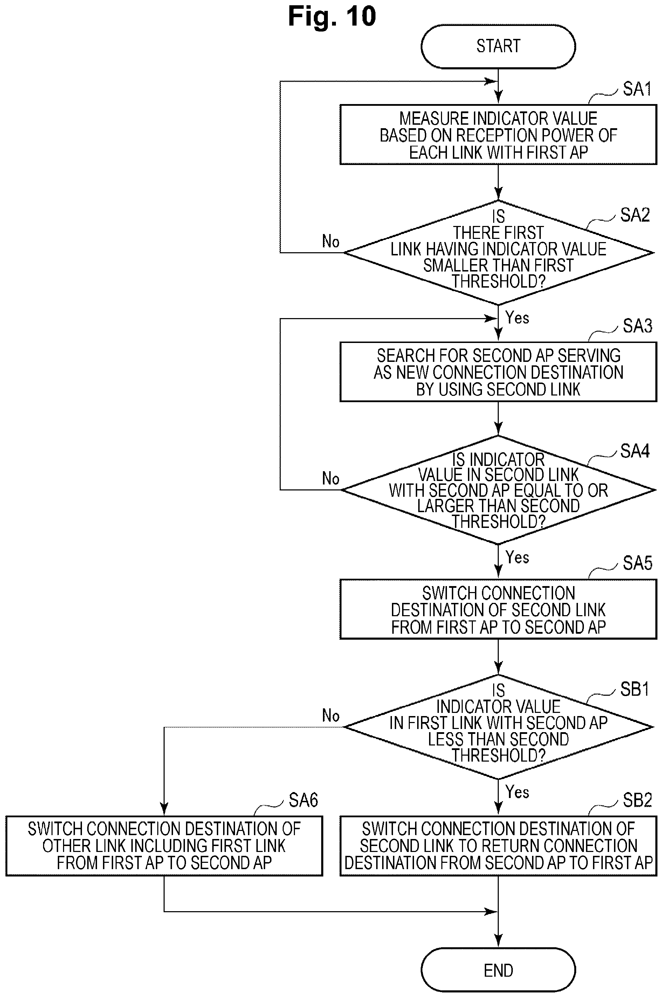

Another example of the operation of the communication system indicating the case of stopping the handover will be described with reference to the flowchart of Fig. 10. Since the processing from step SA1 to step SA6 is similar to that in Fig. 6, the description thereof will be omitted.

In step SB1, after the connection between the terminal 20 and the second access point 10-2 by the second link is established by the processing in step SA5, the determination unit 233 determines whether the index value based on the reception power in the first link is smaller than the second threshold between the terminal 20 and the second access point 10-2. When the reception power of the first link is smaller than the second threshold between the terminal 20 and the second access point 10-2, the process proceeds to step SB2. On the other hand, when the reception power of the first link is equal to or larger than the second threshold between the terminal 20 and the second access point 10-2, the process proceeds to step SA6 to execute the handover of the first link to the second access point 10-2. Here, whether the index value is smaller than the second threshold is determined, but whether the index value is smaller than the first threshold may be determined.

In step SB2, since it is considered that the wireless communication environment is not improved even if the first link is connected to the second access point 10-2, the handover unit 235 disconnects the connection of the second link between the second access point 10-2 and the terminal 20 and reconnects to the first access point 10-1 via the second link so that the connection destination of the second link is returned to the first access point 10-1. As a result, flexible handover can be achieved according to the situation.

In Fig. 10, whether to perform the handover is determined on the basis of whether the index value in the first link is smaller than the second threshold. However, the present invention is not limited to this, and when the index value of at least one link other than the second link in the multi-link is smaller than the second threshold, the process of step SB2 may be executed. The process of step SB2 may be executed only in a case where the index values of all the links other than the second link in the multi-link are smaller than the second threshold.

In the above-described example, in a case where there is the first link whose index value is smaller than the first threshold, the handover destination is searched for in the second link whose index value is equal to or larger than the first threshold, but the handover destination may be searched for in the first link. That is, in step SA3 of Fig. 6, the search unit 234 may search for the second access point 10-2 to be a new connection destination using the first link. Thereafter, after the second access point 10-2 is searched for by the first link and the handover is executed in step SA5, the handover of the remaining links including the second link may be executed in step SA6. As described above, even when the first link and the second link are interchanged, the operation can be similarly performed.

In other words, in a case where there is a quality degradation link having the index value smaller than the first threshold, the search unit 234 searches for the handover destination using the search link selected from the multi-link. The handover unit 235 may execute the handover of the remaining links in the multi-link after executing the handover of the search link. The search link may be a quality degradation link (first link) or a link other than the quality degradation link (for example, second link).

In the case where the multi-link is implemented in the Enhanced Multi Link Single Radio (EMLSR) mode defined in IEEE 802.11be, the second access point 10-2 that becomes the handover destination may be searched for in the link currently used for the transmission.

According to the present embodiment described above, when there is a quality degradation link having the index value based on the reception power smaller than the first threshold and the wireless communication environment is degraded in a state of being connected to the first access point by the multi-link, another handover-available second access point is searched for using the search link selected from the multi-link. When the handover-available access point is detected, the handover is executed with the second access point and the search link. Thereafter, the handover is executed so as to switch the belonging destination of the remaining links in the multi-link from the first access point to the second access point.

As a result, the soft handover can be executed only by the wireless LAN system. Since at least one link can continue to be connected to the access point in a communicable state, instantaneous interruption of communication and connection instability associated with handover can be eliminated, and stable handover can be achieved.

In addition, in order to prevent instantaneous interruption at the time of handover as in the prior art, it is not necessary to maintain a session in both wireless systems different from the mobile communication network and the wireless LAN, and power saving can be achieved.

In addition, the handover processing according to the present embodiment described above can also be stored as a program that can be executed by a processor that is a computer. Furthermore, the program can be stored in a storage medium of an external storage device such as a magnetic disk, an optical disc, or a semiconductor memory for distribution. Then, the processor reads the program stored in the storage medium of the external storage device, and the operation is controlled by the read program, and thereby, the handover processing can be executed.

Note that the present invention is not limited to the above-described embodiments, and various modifications can be made to them at the implementation stage without departing from the scope of the invention. In addition, the embodiments may be implemented in appropriate combination, and in this case, a combined effect can be obtained. Furthermore, the above embodiment includes various inventions, and various inventions can be extracted by a combination selected from a plurality of disclosed components. For example, even if some components are deleted from all the components described in the embodiment, a configuration from which the components have been deleted can be extracted as an invention, as long as the problem can be solved and the effects can be achieved.

### Reference Signs List

1 Communication system
10, 10-1, 10-2 Access point
20 Terminal
30 Network (NW)
11, 21 CPU
12, 22 ROM
13, 23 RAM
14, 24 Wireless communication module
15 Wired communication module
25 Display
26 Storage
110, 210 LLC processing unit
120, 220 Data processing unit
130, 230 Management unit
131, 231 Link management information storage unit
132, 236 Link management unit
140, 240 MAC frame processing unit
150, 160, 170, 250, 260, 270 Wireless signal processing unit
200 Application execution unit
232 Index value calculation unit
233 Determination unit
234 Search unit
235 Handover unit
LI1, LI2, LI3 Link

## Claims

1. A wireless terminal apparatus comprising:
a plurality of wireless units that wirelessly communicate with a first access point by multi-link which wirelessly connects through a plurality of links;
a determination unit that determines whether or not there is a quality degradation link in which an index value based on reception power is smaller than a first threshold among links included in the multi-link;
a search unit that, when there is the quality degradation link, searches for a second access point connectable by the multi-link and capable of handover, by using a search link selected from links included in the multi-link; and
a handover unit that, when there is the second access point, switches a connection destination of the search link from the first access point to the second access point.

2. The wireless terminal apparatus according to claim 1, wherein the search unit selects, as the search link, a link having the index value equal to or larger than the first threshold among the links included in the multi-link.

3. The wireless terminal apparatus according to claim 1, wherein the search unit selects the quality degradation link as the search link.

4. The wireless terminal apparatus according to claim 1, wherein, after connection with the second access point by the search link is established, the handover unit switches a connection destination of remaining links in the multi-link from the first access point to the second access point.

5. The wireless terminal apparatus according to claim 1, wherein the handover unit switches the connection destination of the search link from the second access point to the first access point in a case where an index value when the wireless connection with the second access point is established by the quality degradation link is smaller than a second threshold, the second threshold being larger than the first threshold.

6. The wireless terminal apparatus according to claim 1, wherein the search unit determines, as the second access point, an access point having an index value of the search link equal to or larger than a second threshold larger than the first threshold.

7. A wireless communication method comprising:
wirelessly communicating with a first access point by multi-link which wirelessly connects through a plurality of links;
determining whether or not there is a first link having an index value based on reception power smaller than a first threshold among links included in the multi-link;
searching for a second access point connectable by the multi-link and capable of handover, when there is the first link, by using a second link having the index value equal to or larger than the first threshold among the links included in the multi-link; and
switching a connection destination of the second link from the first access point to the second access point, when there is the second access point.
